# EUROPEAN PATENT SPECIFICATION

(11) **EP 0 736 401 B1**
(45) Date of publication and mention of the grant of the patent: **10.10.2001**
(21) Application number: 96810213.7
(22) Date of filing: 03.04.1996
(51) Int. Cl.: B60D 1/06, B60D 1/48

(54) **Towing device and method for the production of a towing device**
Schleppvorrichtung und Verfahren zum Herstellen einer Schleppvorrichtung
Dispositif d'attelage et procédé pour la fabrication d'un dispositif d'attelage

(30) Priority: 04.04.1995 NL 1000039
(43) Date of publication of application: 09.10.1996
(73) Proprietor: SCAMBIA INDUSTRIAL DEVELOPMENTS AKTIENGESELLSCHAFT, 9494 Schaan (LI)
(72) Inventor: van Strien, Adrianus C., 3560 Lummen (BE); van den Broek, Jacques C., 5655 JL Eindhoven (NL)
(74) Representative: Eder, Carl E.

(56) References cited:
- DE-U- 8 423 990
- DE-U- 9 319 729
- FR-A- 2 442 151

## Description

The invention relates to a towing device according to the preamble of claim 1.

Such a towing device is often designated as towing bar and serves for connecting a trailer detachably to a towing vehicle, particularly a motor road vehicle, e.g. a private car. Known detachable towing devices or towing bars are provided with a ball-rod and an attachment element connected to the latter. The attachment element comprises a manually-operated mechanism which enables the towing device to be attached to a bracket and detached thereof, wherein the bracket is permanently fixed to the towing vehicle.

In general, two methods are currently used for the manufacture of ball-rods and attachment elements. The most common of these is to forge the ball-rod and attachment element as a single part. However, this method of fabrication has a number of undesirable features. Because the forged towing device is fabricated for a specific vehicle, each car model requires its own specific ball-rod assembly geometry determined by the rear bumper shape and the chassis height. Therefore, each additional type of vehicle demands extra tooling costs. Further, after forging, the ball and neck of the ball-rod require machining on a lathe. This necessitates the entire towing-bar to be turned on the lathe around the ball-rod axis. The considerable centrifugal forces which arise during rotation have to be compensated by applying contra-weights. This method of fabrication is therefore costly.

In some cases, the ball-rod and the attachment element are fabricated as seperate parts. The FR 2 442 151 A discloses for instance to produce a ball-rod and a plate forming an attachment element. The ball-rod is connected with the plate by a welding (or brazing or soldering) seam which runs around the ball-rod and connects the latter only in a narrow, annular portion of the surface of the plate with the plate. Such an annular connection results only in a little solidity and durability. According to the quoted publication, the plate and rod shall also be connected by plastic flowing and crimping (or setting), wherein it is not revealed in what manner that such a connection is achieved. It might possibly be intended to insert the ball-rod into a hole of the plate under temporary heating of the latter so that the rod is retained inside the hole after cooling of the plate by a crimp-connection as it is known in the art. If such a crimp-connection is intended in addition to the connection by the welding (or brazing or soldering) seam, the fatigue-resistance of the resulting crimp-connection is limited partly by the residual stress which exists in the material after crimping, and partly by surface degradation caused by microdisplacement of two pieces relative to each other (fit-corrosion). Moreover, the plate or attachment element has to be of sufficient dimensions to enable a crimp-connection with the ball-rod. In general this means that the attachment element has to be minimally 10 to 12 millimeters broader than the ball-rod diameter in all possible diameter directions, thereby resulting in more weight and greater material-costs. Finally, the application a of crimp-connection demands accurate dimensioning of the ball-rod, which results in greater manufacturing costs. A combination of crimping and welding (or brazing or soldering) further increases the costs.

It is a task of the invention to overcome disadvantages of the known towing devices. Starting in particular from a towing device having a ball-rod and an attachment element manufactured as separate parts, it is intended to provide a towing device which is physically compact, has a large resistance to fatigue and is economical to manufacture.

This task is solved according to the invention by a towing device according to claim 1.

The invention relates also to a method for the production of a towing device. This method is defined according to the invention by claim 8.

Advantageous refinements of the towing device and of the method can be inferred from the dependent claims.

According to the invention, the ball-rod is joined to the attachment element by pressure butt-welding or friction-welding so that a metal-adhesion and/or metal-smelt connection is formed at least over substantial parts of the contact-surfaces of the ball-rod and the attachment element.

The contact-surfaces are preferably plain, smooth and full, i.e. free of recesses or holes or the like. The contact-surfaces are for instance circular.

The metal-smelt and/or metal-adhesion connection covers preferably at least the most part of each contact-surface and for instance at least substantially the complete contact-surfaces at which the ball-rod and the attachment element face and contact each other. In a particularly advantageous embodiment, the metal-adhesion and/or metal-smelt connection completely covers the contact-surfaces.

The metal-smelt and/or metal-adhesion connection may be formed by a substantially uniform, homogeneous heating of the contact-surfaces. In this regard it should be remarked that the well-known MIG (metal inert gas), MAG (metal active gas), TIG (tungsten inert gas), manual-arc or autogenous welding techniques are all based on metal-joining by only local smelting, and are not, in view of the low fatigue-resistance caused in part by residual stresses resulting from the temporary, local heating, suitable for joining the ball-rod to the attachment element.

The towing device manufactured in accordance with this invention has the advantage that undesirable features of the known fabrication methods described above, are avoided. In the towing device according to the invention, the attachment element may be a universal element (i.e. the same for all vehicles), while the ball-rod attachment element combination is physically compact, has a large resistance to fatigue, is economical to manufacture and can be made in any desired length and height.

The subject of the invention is described below with reference to an embodiment illustrated in the drawing. In the drawing
Fig. 1 shows an isometric view of a schematic and simplified towing device and
Fig. 2 a somewhat more detailed side view of the towing device.

The towing device or towing bar shown in the two Figures comprises a ball-rod 1 and an attachment element 2. The ball-rod 1 and the attachment element 2 consist initially of separate pieces and are represented in the two Figures in separate state. The ball-rod 1 has a flattened ball at one end and a contact-surface 3 at the other end. The ball-rod 1 is initially straight and rotationally symmetric to an axis as shown by full lines. The ball-rod may then be bent so as to obtain the shape shown in dotted lines.

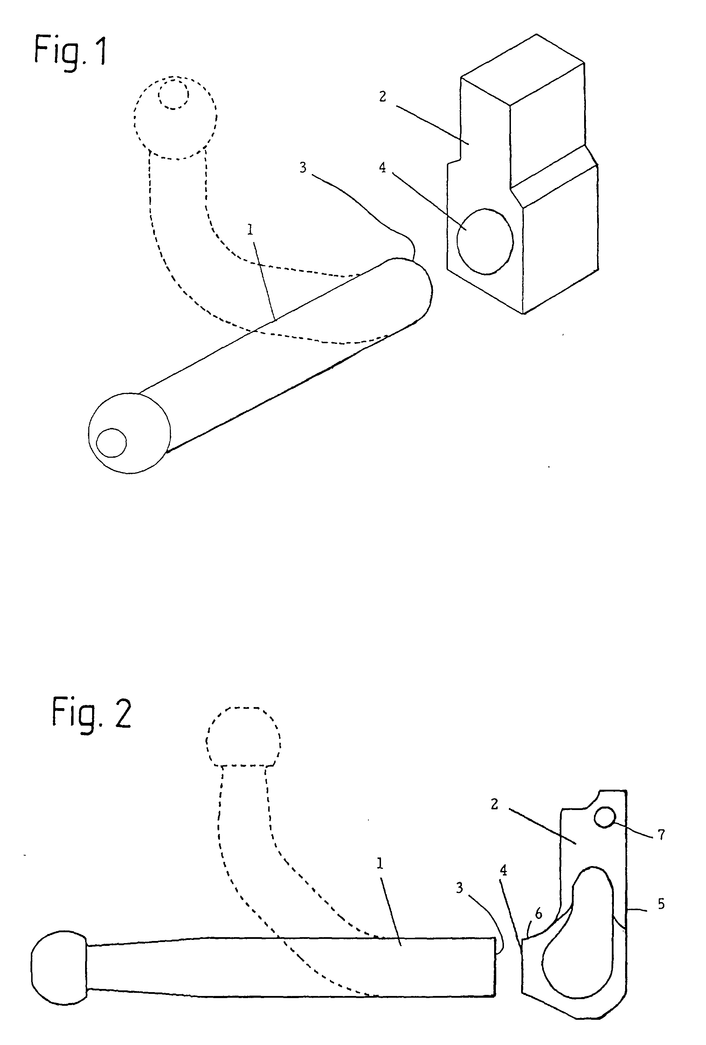

The attachment element 2 comprises a contact-surface 4. The attachment element comprises also a main portion 5 and a projection 6 shown only in Fig. 2. The projection 6 projects away from the main portion 5 towards the ball-rod 1. The initially free end of the projection 6 forms the contact-surface 4.

The ball-rod 1 and the attachment element 2 consist of a metallic material, i.e. steel. The contact-surfaces 3 and 4 are plain, smooth, circular and free of recesses or holes or the like. The diameters of the contact-surfaces are about equal to the diameter of the cylindrical main portion of the ball-rod 1.

The attachment element 2 is provided with a bore in the vicinity of the upper end. A pin is attached in this bore and forms a part of quick coupling means 7.

The attachment element 2 can be attached to a towing vehicle which is not shown. The towing vehicle comprises a frame to which a receptacle bracket is rigidly and undetachably fastened, e.g. welded. The bracket is also provided with quick coupling means and formed in such a way that the attachment element 2 can be attached manually to the bracket and again separated manually from the bracket.

In the production of a towing device, the ball-rod 1 and the attachment element 2 are produced separately, i.e. as separate pieces. The two pieces are then connected rigidly and undetachably for instance by pressure butt-welding or by friction welding. The metallic materials forming the contact-surfaces 3 and 4 of the ball-rod 1 and the attachment element 2 are heated and brought into a plastic and/or molten state during the welding operation. If the materials forming the contact-surfaces melt, the ball-rod 1 and the attachment element 2 are then joined by a metal-smelt connection. If the materials forming the contact-surfaces 3, 4 achieve only plastic states, the ball-rod 1 and the attachment element 2 are then joined by a metal-adhesion connection. If the materials achieve plastic states and/or melt substantially over the whole contact-surfaces, a very solid connection is achieved which is at least almost free of stresses. The pressure butt-welding and friction-welding techniques are described more in detail below.

### Pressure butt-welding

Pressure butt-welding involves applying an electrical potential difference to the two metallic pieces which are to be connected, i.e. to the ball-rod 1 and the attachment element 2. The two pieces are then brought into contact, and subsequently withdrawn from each other in order to generate an electric arc. Maintenance of the arcing for several seconds causes the whole of the connecting surfaces or contact-surfaces 3, 4 or - more precisely - the material forming these surfaces to melt. Afterwards, the two pieces are pressed hard against each other to achieve the required weld-joint.

### Friction-welding

Friction welding relies on heating the contacting surfaces 3, 4 not by electrical energy, but by friction between the contact-surfaces. The ball-rod 1 is pressed against the attachment element 2 using a large force, while the same is rotated around its axis. As soon as friction has caused the materials forming the contact-surfaces 3, 4 to melt and/or to achieve at least a plastic state, rotation is ceased and the both pieces are pressed with a force still larger than the one exerted during rotation into their definitive positions.

When the ball-rod 1 and the attachment element 2 are joined by one of this welding methods, one may bend the ball-rod 1 so that the towing device forms then a hook. In case that the rod-bar and the attachment element are joined by pressure butt-welding, one may possibly bend the ball-rod before the ball-rod is connected to the attachment element.

## Claims

1. Towing device with a ball-rod (1) and an attachment element (2) which is connected to the ball-rod (1) and adapted to be mounted to a towing vehicle, **characterized in that** the ball-rod (1) is joined by a pressure butt-weld connection or friction-weld connection so that a metal-adhesion and/or metal-smelt connection is formed which covers at last a substantial part of contact-surfaces (3, 4) of the ball-rod (1) and of the attachment element (2).

2. Towing device according to claim 1, **characterized in that** the attachment element (2) is adapted to be mounted detachably to the towing vehicle, wherein the towing vehicle comprises preferably a frame and a bracket connected undetachably to the frame, wherein the attachment element (2) is preferably adapted to be connected detachably to the bracket and wherein the attachment element (2) and the bracket comprise for instance quick coupling means (7).

3. Towing device according to claim 1 or 2, **characterized in that** the contact-surfaces (3, 4) are plain.

4. Towing device according to claim 3, **characterized in that** the contact surfaces (3, 4) are free of recesses or holes.

5. Towing device according to one of claims 1 to 4, **characterized in that** the metal-adhesion and/or metal-smelt connection covers at least the most part of the contact-surfaces (3, 4) and for instance substantially the complete contact-surfaces (3, 4).

6. Towing device according to one of the claims 1 to 5, **characterized in that** the attachment element (2) comprises a main portion (5) and a projection (6) which projects away from the main portion (5) and forms, at an initially free end of the projection (6), the contact surface (4) of the attachment element (2), wherein this contact surface (4) is preferably circular.

7. Towing device according to one of claims 1 to 6, **characterized in that** the ball-rod (1) has a plain end surface constituting the contact-surface (3) of the ball-rod (1), wherein the contact-surface (3) of the ball-rod (1) is for instance circular.

8. Method for the production of a towing device with a ball-rod (1) and an attachment element (2) which is connected to the ball-rod (1) and adapted to be mounted to a towing vehicle, **characterized in that** the ball-rod (1) and the attachment element (2) are joined by pressure butt-welding or by friction-welding, wherein materials forming at least substantial parts of contact-surfaces (3, 4) of the ball-rod (1) and of the attachment element (2) are heated and brought to a plastic and/or molten state so that the ball-rod (1) and the attachment element (2) are joined by a metal-adhesion and/or metal-smelt connection at least over a substantial part of the contact-surfaces (3,4).

9. Method according to claim 8, **characterized in that** the contact-surfaces (3, 4) of the ball-rod (1) and the attachment element (2) are heated at least approximately uniformly during the formation of the connection.

10. Method according to claim 8 or 9, **characterized in that** the attachment element (2) and an end of the ball-rod (1) are provided with plain surfaces forming the contact surfaces (3, 4).

11. Method according to one of claims 8 to 10, **characterized in that** the ball-rod (1) is pressed against the attachment element (2) and rotated with respect to the attachment element (2) during friction-welding for heating materials forming the contact-surfaces (3, 4) so that these materials get in a plastic state, that rotation is then ceased and that the ball-rod (1) is pressed against the attachment element (2) so that the ball-rod (1) and the attachment element (2) are joined.

12. Method according to one of claims 8 to 11, **characterized in that** the ball-rod (1) is bent after having been joined with the attachment element (2).

13. Method according to one of claims 8 to 10, **characterized in that** the ball-rod (1) and the attachment element (2) are heated during pressure butt-welding by producing an electric arc between the ball-rod (1) and the attachment element (2) and that the ball-rod (1) and the attachment element (2) are afterwards pressed against each other.

## Patentansprüche

1. Schleppvorrichtung mit einer Kugelstange (1) und einem Befestigungselement (2), das mit der Kugelstange (1) verbunden und zum Montieren an einem Zugfahrzeug ausgebildet ist, **dadurch gekennzeichnet, dass** die Kugelstange (1) durch eine Pressstumpfschweissverbindung oder eine Reibschweissverbindung angefügt ist, so dass eine Metall-Adhäsions- und/oder Metall-Schmelzverbindung gebildet wird, die mindestens einen wesentlichen Teil von Kontaktflächen (3, 4) der Kugelstange (1) und des Befestigungselements (2) bedeckt.

2. Schleppvorrichtung nach Anspruch 1, **dadurch gekennzeichnet, dass** das Befestigungselement (2) zur lösbaren Befestigung am Zugfahrzeug ausgebildet ist, wobei das Zugfahrzeug vorzugsweise ein Gestell und einen unlösbar mit dem Gestell verbundenen Halter aufweist, wobei das Befestigungselement (2) vorzugsweise zur lösbaren Befestigung am Halter ausgebildet ist und der Halter zum Beispiel Schnellkuppelungsmittel (7) aufweist.

3. Schleppvorrichtung nach Anspruch 1 oder 2, **dadurch gekennzeichnet, dass** die Kontaktflächen (3, 4) eben sind.

4. Schleppvorrichtung nach Anspruch 3, dass die Kontaktflächen (3, 4) frei von Vertiefungen oder Löchern sind.

5. Schleppvorrichtung nach einem der Ansprüche 1 bis 4, **dadurch gekennzeichnet, dass** die Metall-Adhäsions- und/oder Metall-Schmelzverbindung mindestens den grössten Teil der Kontaktflächen (3, 4) und zum Beispiel im Wesentlichen die ganzen Kontaktflächen (3, 4) bedeckt.

6. Schleppvorrichtung nach einem der Ansprüche 1 bis 5, **dadurch gekennzeichnet, dass** das Befestigungselement (2) einen Hauptabschnitt (5) und einen Vorsprung (6) aufweist, der vom Hauptabschnitt (5) wegragt und bei einem ursprünglich freien Ende des Vorsprungs (6) die Kontaktfläche (4) des Befestigungselements (2) bildet, wobei diese Kontaktfläche (4) vorzugsweise kreisförmig ist.

7. Schleppvorrichtung nach einem der Ansprüche 1 bis 6, **dadurch gekennzeichnet, dass** die Kugelstange (1) eine ebene, die Kontaktfläche (3) der Kugelstange (1) bildende Endfläche hat, wobei die Kontaktfläche (3) der Kugelstange (1) zum Beispiel kreisförmig ist.

8. Verfahren zum Herstellen einer Schleppvorrichtung mit einer Kugelstange (1) und einem Befestigungselement (2), das mit der Kugelstange (1) verbunden und zum Montieren an einem Zugfahrzeug ausgebildet ist, **dadurch gekennzeichnet, dass** die Kugelstange (1) und das Befestigungselement (2) durch Pressstumpfschweissen oder durch Reibschweissen zusammengefügt werden, wobei mindestens wesentliche Teile von Kontaktflächen (3, 4) der Kugelstange (1) und des Befestigungselements (2) bildende Materialien erhitzt und in einen plastischen und/oder geschmolzenen Zustand gebracht werden, so dass die Kugelstange (1) und das Befestigungselement (2) mindestens über einen wesentlichen Teil der Kontaktflächen (3, 4) durch eine Metall-Adhäsions- und/oder Metall-Schmelzverbindung zusammengefügt werden.

9. Verfahren nach Anspruch 8, **dadurch gekennzeichnet, dass** die Kontaktflächen (3, 4) der Kugelstange (1) und des Befestigungselements (2) während der Bildung der Verbindung mindestens annähernd gleichmässig erhitzt wurden.

10. Verfahren nach Anspruch 8 oder 9, **dadurch gekennzeichnet, dass** das Befestigungselement (2) und ein Ende der Kugelstange (1) mit ebenen, die Kontaktflächen (3, 4) bildenden Flächen versehen wurden.

11. Verfahren nach einem der Ansprüche 8 bis 10, **dadurch gekennzeichnet, dass** die Kugelstange (1) gegen das Befestigungselement (2) gepresst und während des Reibschweissens bezüglich des Befestigungselements (2) zum Erhitzen von die Kontaktflächen (3, 4) bildenden Materialien gedreht wird, so dass diese Materialien in einen plastischen Zustand gelangen, dass das Drehen dann beendet wird und dass die Kugelstange (1) gegen das Befestigungselement (2) gepresst wird, so dass die Kugelstange (1) und das Befestigungselement (2) zusammengefügt werden.

12. Verfahren nach einem der Ansprüche 8 bis 11, **dadurch gekennzeichnet, dass** die Kugelstange (1) nach dem Zusammenfügen mit dem Befestigungselement (2) gebogen wird.

13. Verfahren nach einem der Ansprüche 8 bis 10, **dadurch gekennzeichnet, dass** die Kugelstange (1) und das Befestigungselement (2) während des Pressstumpfschweissens durch Erzeugen eines elektrischen Lichtbogens zwischen der Kugelstange (1) und dem Befestigungselement (2) erhitzt werden und dass die Kugelstange (1) und das Befestigungselement (2) danach gegeneinander gepresst werden.

## Revendications

1. Dispositif de remorquage muni d'une barre à rotule (1) et d'un élément de fixation (2) qui est relié à la barre à rotule (1) et conçu pour être monté sur un véhicule de remorquage, **caractérisé en ce que** la barre à rotule (1) est assemblée au moyen d'une liaison par soudage en bout par pression ou d'une liaison par soudage par friction de sorte qu'une liaison par adhérence du métal et/ou fonte du métal est réalisée, laquelle recouvre au moins une partie substantielle des surfaces de contact (3, 4) de la barre à rotule (1) et de l'élément de fixation (2).

2. Dispositif de remorquage selon la revendication 1, **caractérisé en ce que** l'élément de fixation (2) est conçu pour être monté de façon démontable sur le véhicule de remorquage, dans lequel le véhicule de remorquage comprend de préférence un châssis et un support relié au châssis sans possibilité d'être démonté, dans lequel l'élément de fixation (2) est conçu de préférence pour être relié de façon démontable au support et dans lequel l'élément de fixation (2) et le support comprennent par exemple un moyen d'accouplement rapide (7).

3. Dispositif de remorquage selon la revendication 1 ou 2, **caractérisé en ce que** les surfaces de contact (3, 4) sont unies.

4. Dispositif de remorquage selon la revendication 3, **caractérisé en ce que** les surfaces de contact (3, 4) sont dépourvues de creux ou de trous.

5. Dispositif de remorquage selon l'une des revendications 1 à 4, **caractérisé en ce que** la liaison par adhérence du métal et/ou fonte du métal recouvre au moins la plus grande partie des surfaces de contact (3, 4) et par exemple pratiquement les surfaces de contact entières (3, 4).

6. Dispositif de remorquage selon l'une des revendications 1 à 5, **caractérisé en ce que** l'élément de fixation (2) comprend une partie principale (5) et une saillie (6) qui dépasse de la partie principale (5) et forme, au niveau d'une extrémité initialement libre de la saillie (6) la surface de contact (4) de l'élément de fixation (2), dans lequel cette surface de contact (4) est de préférence circulaire.

7. Dispositif de remorquage selon l'une des revendications 1 à 6, **caractérisé en ce que** la barre à rotule (1) présente une surface d'extrémité unie constituant la surface de contact (3) de la barre à rotule (1) dans lequel la surface de contact (3) de la barre à rotule (1) est par exemple circulaire.

8. Procédé de fabrication d'un dispositif de remorquage muni d'une barre à rotule (1) et d'un élément de fixation (2) qui est relié à la barre à rotule (1) et conçu pour être monté sur un véhicule de remorquage, **caractérisé en ce que** la barre à rotule (1) et l'élément de fixation (2) sont assemblés par soudage en bout par pression ou par soudage par friction, dans lequel les matériaux formant au moins les parties substantielles des surfaces de contact (3, 4) de la barre à rotule (1) et de l'élément de fixation (2) sont chauffés et amenés dans un état plastique et/ou fondu de sorte que la barre à rotule (1) et l'élément de fixation (2) sont assemblés par une liaison par adhérence du métal et/ou fonte du métal au moins sur une partie substantielle des surfaces de contact (3, 4).

9. Procédé selon la revendication 8, **caractérisé en ce que** les surfaces de contact (3, 4) de la barre à rotule (1) et de l'élément de fixation (2) sont chauffées au moins approximativement de façon uniforme durant la réalisation de la liaison.

10. Procédé selon la revendication 8 ou 9, **caractérisé en ce que** l'élément de fixation (2) et une extrémité de la barre à rotule (1) sont munis de surfaces unies formant les surfaces de contact (3, 4).

11. Procédé selon l'une des revendications 8 à 10, **caractérisé en ce que** la barre à rotule (1) est pressée contre l'élément de fixation (2) et entraînée en rotation par rapport à l'élément de fixation (2) durant le soudage par friction en vue de chauffer les matériaux formant les surfaces de contact (3, 4) de sorte que ces matériaux entrent dans un état plastique, que la rotation est ensuite arrêtée et que la barre à rotule (1) est pressée contre l'élément de fixation (2) de sorte que la barre à rotule (1) et l'élément de fixation (2) sont assemblés.

12. Procédé selon l'une des revendications 8 à 11, **caractérisé en ce que** la barre à rotule (1) est pliée après avoir été assemblée avec l'élément de fixation (2).

13. Procédé selon l'une des revendications 8 à 10, **caractérisé en ce que** la barre à rotule (1) et l'élément de fixation (2) sont chauffés durant le soudage en bout par pression en réalisant un arc électrique entre la barre à rotule (1) et l'élément de fixation (2) et **en ce que** la barre à rotule (1) et l'élément de fixation (2) sont ensuite pressés l'un contre l'autre.
